# EUROPEAN PATENT APPLICATION

(11) **EP 4 835 600 A1**
(43) Date of publication of application: **04.11.2026**
(21) Application number: 26175033.5
(22) Date of filing: 28.04.2026
(51) Int. Cl.: G05B 23/02

(54) **SYSTEMS AND METHODS FOR CONDITION BASED MONITORING**

(30) Priority: 02.05.2025 US 202519197393
(71) Applicant: Rockwell Automation Technologies, Inc., Mayfield Heights, OH 44124 (US)
(72) Inventor: SayyarRodsari, Bijan, Mayfield Heights, OH, 44124 (US); Gupta, Shashank, Mayfield Heights, OH, 44124 (US)
(74) Representative: Grünecker Patent- und Rechtsanwälte PartG mbB

(57) **Abstract**

A method that includes retrieving first visual data indicating operations of industrial automation equipment, extracting a plurality of features from the first visual data, and determining a subset of the plurality of features of the first visual data, wherein the subset of the plurality of features indicates a change in an operating condition of the industrial automation equipment. The method also includes retrieving second visual data indicating the operations of the industrial automation equipment, detecting, using the second visual data, the change in the operating condition of the industrial automation equipment based on the subset of the plurality of features, and generating an output to control the operations of the industrial automation equipment based on the detected change in the operating condition.

## Description

### BACKGROUND

The present disclosure generally relates to condition monitoring systems and, more particularly, to condition monitoring systems for predicting changes in processes and functions of industrial operations.

Generally, a control system may be incorporated into industrial operations to monitor automation processes and functions to determine if industrial operations are proceeding as desired. The control system may be used to correct and/or flag industrial operations that vary from standard protocols. Such control may prevent large-scale deviations of industrial operations from standard protocols. Previously available control systems may monitor changes in data collected from associated equipment, sensor feedback, user observations, or a combination thereof. While monitoring changes in collected data may be used to control large-scale deviations from standard protocols, such response based on changes to collected data are reactionary. Reactionary response to changes in industrial operations may limit operational efficiency of industrial operations due to incurred operational down time, impacts to equipment, and the like subsequent to detection of variance of particular industrial operations from standard protocols. Accordingly, new techniques for predicting changes in processes and functions of industrial operations are needed.

This section is intended to introduce the reader to various aspects of art that may be related to various aspects of the present techniques, which are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

### BRIEF DESCRIPTION

A summary of certain embodiments disclosed herein is set forth below. It should be understood that these aspects are presented merely to provide the reader with a brief summary of these certain embodiments and that these aspects are not intended to limit the scope of this disclosure. Indeed, this disclosure may encompass a variety of aspects that may not be set forth below.

In one embodiment, the present disclosure relates to a method that includes retrieving first visual data indicating operations of industrial automation equipment, extracting a plurality of features from the first visual data, and determining a subset of the plurality of features of the first visual data, wherein the subset of the plurality of features indicates a change in an operating condition of the industrial automation equipment. The method also includes retrieving second visual data indicating the operations of the industrial automation equipment, detecting, using the second visual data, the change in the operating condition of the industrial automation equipment based on the subset of the plurality of features, and generating an output to control the operations of the industrial automation equipment based on the detected change in the operating condition.

In one embodiment, present disclosure relates to a system including one or more cameras configured to capture visual data associated with operations of industrial automation equipment, a processing circuitry, and a memory, accessible by the processing circuitry. The memory storing instructions when executed by the processing circuitry cause the processing circuitry to perform operations including retrieving the visual data from the one or more cameras and retrieving process data associated with operation of the industrial automation equipment. The operations also include detecting, via a clustering engine, a change in operating condition of the industrial automation equipment based on a subset of features of the visual data, extracting one or more markers from the process data associated with the detected change in operating condition of the industrial automation equipment, and generating an output to control operations of the industrial automation equipment based on the one or more markers associated with the detected change in the operating condition.

In one embodiment, the present disclosure relates to a non-transitory computer-readable medium comprising computer-executable instructions that, when executed, are configured to cause a processor to perform operations including receiving first visual data indicating operations of one or more industrial automation equipment, extracting a plurality of features from the first visual data, and determining a subset of the plurality of features of the first visual data, wherein the subset of the plurality of features indicates a change in an operating condition of the one or more industrial automation equipment. The operations also include receiving second visual data indicating the operations of the one or more industrial automation equipment, detecting, using the second visual data, the change in the operating condition of the one or more industrial automation equipment based on the subset of the plurality of features, and generating an output to control the operations of the one or more industrial automation equipment based on the detected change in the operating condition..

### BRIEF DESCRIPTION OF DRAWINGS

These and other features, aspects, and advantages of the present disclosure will become better understood when the following detailed description is read with reference to the accompanying drawings in which like characters represent like parts throughout the drawings, wherein:
FIG. 1 illustrates an example industrial automation system employed by a food manufacturer, in accordance with aspects of the present techniques;
FIG. 2 illustrates a diagrammatical representation of an exemplary control and condition monitoring system that may be employed in any suitable industrial automation system, in accordance with aspects of the present techniques;
FIG. 3 is a flow diagram of a process to extract features from visual data to generate a baseline indicative of operation of industrial automation equipment, in accordance with aspects of the present techniques;
FIG. 4 is a flow diagram of a process to extract features from visual data to control operation of industrial automation equipment, in accordance with aspects of the present techniques;
FIG. 5 is a flow diagram of a process of predicting formation of one or more new clusters associated with one or more markers within process data, in accordance with aspects of the present techniques; and
FIG. 6 is a schematic embodiment of a graphical user interface (GUI) generated within the condition monitoring system of FIG. 2, in in accordance with aspects of the present techniques.

### DETAILED DESCRIPTION

One or more specific embodiments of the present disclosure will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present disclosure, the articles "a," "an," "the," and "said" are intended to mean that there are one or more of the elements. The terms "comprising," "including," and "having" are intended to be inclusive and mean that there may be additional elements other than the listed elements.

In addition, as used herein, the terms "real time", "real-time", or "near real time" may be used interchangeably and are intended to describe operations (e.g., computing operations) that are performed without any human-perceivable interruption between operations. For example, as used herein, data relating to the systems described herein may be collected, transmitted, and/or used in control computations in "near real time" such that data readings, data transfers, and/or data processing steps occur once every second, once every 0.1 second, once every 0.01 second, or even more frequent, during operations of the systems (e.g., while the systems are operating).

As discussed above, control systems may be incorporated into industrial operations to monitor automation processes and functions to determine if industrial operations are proceeding as desired and may be used to correct industrial operations that vary from standard protocols. Monitoring changes in collected data may be used to control large-scale deviations from standard protocols, however, such response based on changes to collected data may provide reactionary response. Such reactionary response may limit operational efficiency of industrial operations due to incurred operational downtime, impacts to equipment, and the like subsequent to detection of variance of particular industrial operations from standard protocols. Accordingly, new techniques for predicting changes in processes and functions of industrial operations are needed.

Accordingly, a condition monitoring system is disclosed herein that provides predictive monitoring functionality for processes and functions of industrial operations of an enterprise. The condition monitoring system utilizes visual data (e.g., video data, image data, a video, a video stream) collected during industrial operations to predict changes in operation (e.g., changes in operating conditions) of one or more components of an industrial automation system. Prediction of changes in operation may be based on using a feature extraction engine of the condition monitoring system to extract one or more features from the visual data. The feature extraction engine may extract features associated with specific operations of the industrial automation system. In this manner, the feature extraction engine may be used to reduce dimensionality of video data while still enabling prediction of changes in operation of the components of the industrial automation system. For example, a plurality of features may be extracted by the condition monitoring system upon analysis of the video data, however a subset of features may be used to predict changes in operation. The subset of features may be compared to one or more thresholds, process data, historical data, and the like to predict changes in specific operations of the industrial automation system. Identification and monitoring of the subset of features may offer increased granular and anticipatory control of industrial operations of the industrial automation system.

In some embodiments, the condition monitoring system may determine the subset of the features using artificial intelligence (AI) technologies including vision (e.g., visual data) as a sensor. The subset of the features identified by the AI technologies (e.g., neural networks, machine learning) include features that are not apparent to operational users. In some embodiments, the AI technologies identify the subset of the features using the feature extraction engine. The feature extraction engine may include an unsupervised model configured to process unlabeled video data, unlabeled process data, unlabeled historical data, and the like. As one non-limiting example in an industrial context, the feature extraction engine of the condition monitoring system may identify a first feature associated with out of axis motion of a first component of a piece of equipment and a second feature associated with a speed of operation of a second component of the piece of equipment.

The condition monitoring system may monitor combined changes of the first and second features to predict a change in operation of the piece of equipment. Combined changes in features may provided nuanced identification of operational changes not offered using changes in operational data (e.g., vibration data, current data, drive data, etc.). The condition monitoring system may proactively provide a notification to control systems and/or operational users. The condition monitoring system may directly control a control system to control operation of the piece of equipment to improve operational efficiency by preventing operational changes from impacting the industrial automation system. Additionally, by identifying particular features, the condition monitoring system improves efficiency of computing resources by reducing data dimensionality reducing video data processing costs. Additionally, present embodiments include a graphical user interface (GUI) designed to provide insight of changes in features used to predict changes in operation of industrial automation equipment in a concise and organized format.

In certain embodiments, the condition monitoring system may provide features extracted by the feature extraction engine to a clustering engine. The clustering engine may generate a baseline indicative of nominal operation of industrial automation equipment. The clustering engine may receive features extracted from video data of industrial automation equipment and perform stream clustering of data extracted from one or more incoming frames of the video data. The clustering engine may assign the incoming frames to one or more clusters. The clusters may be used to determine if incoming features of the video data fall within a threshold distance (e.g., threshold deviation) of the baseline. In some instances, the clusters may be formed in near real-time enabling deviations from the baseline to be identified. In some embodiments, the clusters formed based on the incoming frames of the video data may deviate from the baseline generated by the clustering engine. As such, operation of associated industrial automation equipment may be flagged as deviating from nominal operation.

In some embodiments, the condition monitoring system may be used to identify one or more markers responsible for generating clusters deviating from the baseline indicative of nominal operation of industrial automation equipment. The markers may be identified by analyzing process data (e.g., input data from one or more sensors associated with industrial automation equipment) corresponding to formation of a new cluster associated with a deviation from the baseline. In some embodiments, the condition monitoring system may be used to identify the markers using automated association between the process data and the emergence of the new cluster using transformer architecture (e.g., encoder-decoder based AI based model). For example, the transformer architecture may be used to isolate an attention point in the process data associated with emergence of the new cluster from the video data. In some instances, the attention point may be labeled as the one or more markers associated with a subset of the process data resulting in deviation of operation of industrial automation equipment from the baseline. In this manner, the condition monitoring system may predict changes in operations of the industrial automation equipment based on analyzing video data and identifying formation of one or more new clusters associated with predetermined markers. Such predictions may enable anticipatory control of industrial operations of the industrial automation system.

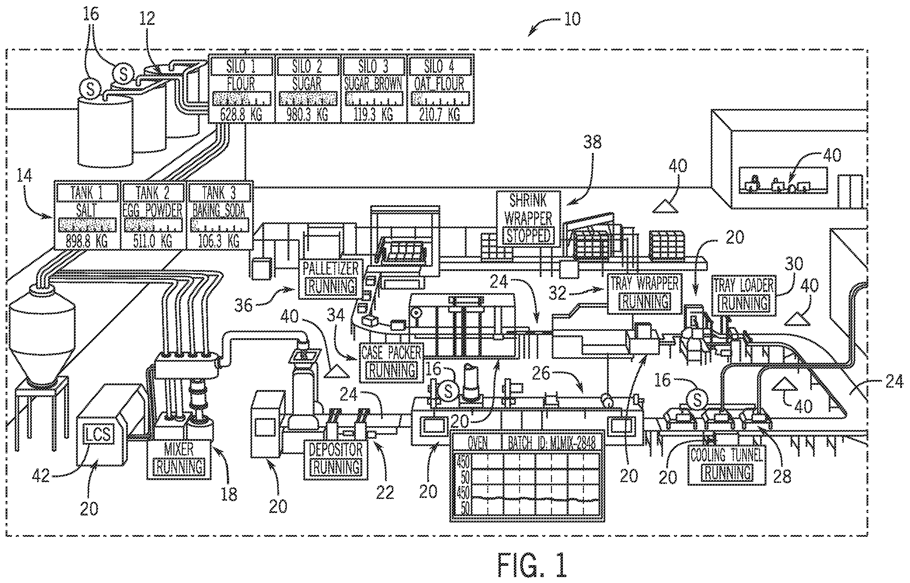

By way of introduction, FIG. 1 illustrates an example industrial automation system 10 employed by a food manufacturer. The present embodiments described herein may be implemented using the various devices illustrated in the industrial automation system 10 described below. However, it should be noted that although the example industrial automation system 10 of FIG. 1 is directed at a food manufacturer, the present embodiments described herein may be employed within any suitable industry, such as automotive, mining, hydrocarbon production, manufacturing, and the like. The following brief description of the example industrial automation system 10 employed by the food manufacturer is provided herein to help facilitate a more comprehensive understanding of how the embodiments described herein may be applied to industrial devices to significantly improve the operations of the respective industrial automation system. As such, the embodiments described herein should not be limited to be applied to the example depicted in FIG. 1.

Referring now to FIG. 1, the example industrial automation system 10 for a food manufacturer may include silos 12 and tanks 14. The silos 12 and the tanks 14 may store different types of raw material, such as grains, salt, yeast, sweeteners, flavoring agents, coloring agents, vitamins, minerals, and preservatives. In some embodiments, sensors 16 may be positioned within or around the silos 12, the tanks 14, or other suitable locations within the industrial automation system 10 to measure certain properties, such as temperature, mass, volume, pressure, humidity, and the like.

The raw materials may be provided to a mixer 18, which may mix the raw materials together according to a specified ratio. The mixer 18 and other machines in the industrial automation system 10 may employ certain industrial automation devices 20 to control the operations of the mixer 18 and other machines. The industrial automation devices 20 may include controllers, input/output (I/O) modules, motor control centers, motors, human machine interfaces (HMIs), operator interfaces, contactors, starters, sensors 16, actuators, conveyors, drives, relays, protection devices, switchgear, compressors, sensor, actuator, firewall, network switches (e.g., Ethernet switches, modular-managed, fixed-managed, service-router, industrial, unmanaged, etc.) and the like.

The mixer 18 may provide a mixed compound to a depositor 22, which may deposit a certain amount of the mixed compound onto conveyor 24. The depositor 22 may deposit the mixed compound on the conveyor 24 according to a shape and amount that may be specified to a control system for the depositor 22. The conveyor 24 may be any suitable conveyor system that transports items to various types of machinery across the industrial automation system 10. For example, the conveyor 24 may transport deposited material from the depositor 22 to an oven 26, which may bake the deposited material. The baked material may be transported to a cooling tunnel 28 to cool the baked material, such that the cooled material may be transported to a tray loader 30 via the conveyor 24. The tray loader 30 may include machinery that receives a certain amount of the cooled material for packaging. By way of example, the tray loader 30 may receive 25 ounces of the cooled material, which may correspond to an amount of cereal provided in a cereal box.

A tray wrapper 32 may receive a collected amount of cooled material from the tray loader 30 into a bag, which may be sealed. The tray wrapper 32 may receive the collected amount of cooled material in a bag and seal the bag using appropriate machinery. The conveyor 24 may transport the bagged material to case packer 34, which may package the bagged material into a box. The boxes may be transported to a palletizer 36, which may stack a certain number of boxes on a pallet that may be lifted using a forklift or the like. The stacked boxes may then be transported to a shrink wrapper 38, which may wrap the stacked boxes with shrink-wrap to keep the stacked boxes together while on the pallet. The shrink-wrapped boxes may then be transported to storage or the like via a forklift or other suitable transport vehicle.

To perform the operations of each of the devices in the example industrial automation system 10, the industrial automation devices 20 may provide power to the machinery used to perform certain tasks, provide protection to the machinery from electrical surges, prevent injuries from occurring with human operators in the industrial automation system 10, monitor the operations of the respective device, communicate data regarding the respective device to a supervisory control system 40, and the like. In some embodiments, each industrial automation device 20 or a group of industrial automation devices 20 may be controlled using a local control system 42. The local control system 42 may include receive data from a condition monitoring system regarding the operation of the respective industrial automation device 20, other industrial automation devices 20, user inputs, and other suitable inputs to control the operations of the respective industrial automation device(s) 20.

The one or more sensors 16 may be any number of devices adapted to provide process data (e.g., information regarding process conditions), historical data, and the like. The sensors 16 may be utilized to operate the industrial automation equipment of the industrial automation system 10 in real time and/or over a predetermined time. Indeed, process data may be utilized within process loops that are monitored and controlled by a condition monitoring system and/or an HMI. Such a process loop may be activated based on the process data (e.g., input from a sensor 16) or direct operator input received through the HMI. The sensors 16 and one or more actuators are in communication with the HMI 52 and the industrial automation equipment. Further, the sensors 16 and actuators may receive power from one or more additional attached modules.

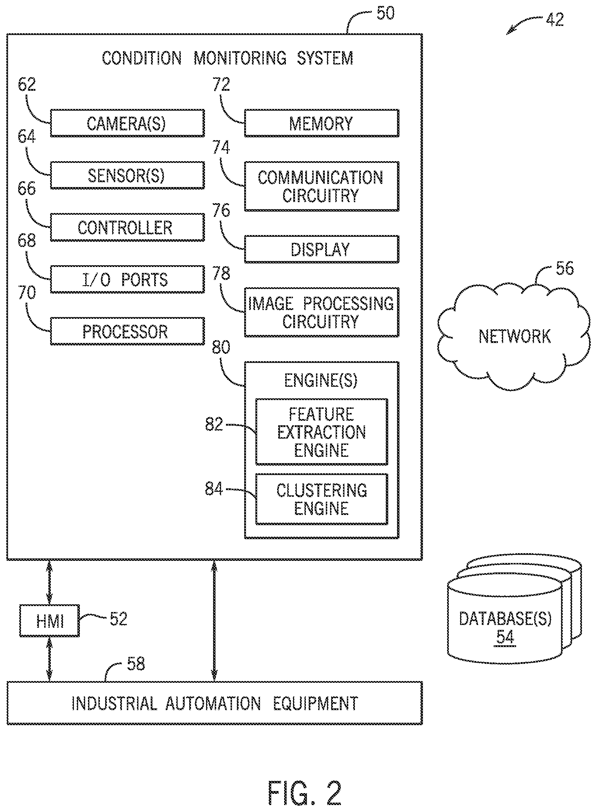

FIG. 2 illustrates a diagrammatical representation of an exemplary local control system 42 including a condition monitoring system 50 that may be employed in any suitable industrial automation system 10, in accordance with embodiments presented herein. In FIG. 2, the local control system 42 is illustrated as including the condition monitoring system 50, a human machine interface (HMI) 52, one or more databases 54, and a network 56. The local control system 42 is adapted to interface with devices that may monitor and control various types of industrial automation equipment 58. By way of example, the industrial automation equipment 58 may include the mixer 18, the depositor 22, the conveyor 24, the oven 26, other pieces of machinery described in FIG. 1, or any other suitable equipment.

In certain embodiments, one or more properties of the industrial automation equipment 58 may be monitored and controlled by certain equipment for regulating control variables used to operate the industrial automation equipment 58. For example, the sensors 16 shown in FIG. 1 may monitor various properties of the industrial automation equipment 58 and may provide data to the local control system 42, which may adjust operations of the industrial automation equipment 58, respectively. In some cases, the industrial automation equipment 58 may be associated with devices used by other equipment. For instance, scanners, gauges, valves, flow meters, and the like may be disposed on industrial automation equipment 58. Here, the industrial automation equipment 58 may receive data from the associated devices and use the data to perform their respective operations more efficiently. For example, a controller of a motor drive may receive data regarding a temperature of a connected motor and may adjust operations of the motor drive based on the data.

As discussed above, the industrial automation equipment 58 may take many forms and include devices for accomplishing many different and varied purposes. For example, the industrial automation equipment 58 may include machinery used to perform various operations in a compressor station, an oil refinery, a batch operation for making food items, a mechanized assembly line, and so forth. Accordingly, the industrial automation equipment 58 may comprise a variety of operational components, such as electric motors, valves, actuators, temperature elements, pressure sensors, or a myriad of machinery or devices used for manufacturing, processing, material handling, and other applications.

Additionally, the industrial automation equipment 58 may include various types of equipment that may be used to perform the various operations that may be part of an industrial application. For instance, the industrial automation equipment 58 may include electrical equipment, hydraulic equipment, compressed air equipment, steam equipment, mechanical tools, protective equipment, refrigeration equipment, power lines, hydraulic lines, steam lines, and the like. Some example types of equipment may include mixers, machine conveyors, tanks, skids, specialized original equipment manufacturer machines, and the like. In addition to the equipment described above, the industrial automation equipment 58 may be made up of certain industrial automation devices 20 of FIG. 1, which may include controllers, input/output (I/O) modules, motor control centers, motors, human machine interfaces (HMIs), operator interfaces, contactors, starters, sensors 16, actuators, drives, relays, protection devices, switchgear, compressors, firewall, network switches (e.g., Ethernet switches, modular-managed, fixed-managed, service-router, industrial, unmanaged, etc.), and the like.

In certain embodiments, the industrial automation equipment 58 may include a communication component that enables the industrial automation equipment 58 to communicate data between the industrial automation equipment 58 and the HMI 52 and/or the condition monitoring system 50. The communication component may include a network interface that may enable the industrial automation equipment 58 to communicate via various protocols over the network 56 such as Ethernet/IP^{®}, ControlNet^{®}, DeviceNet^{®}, or any other industrial communication network protocol. Alternatively, the communication component may enable the industrial automation equipment 58 to communicate via various wired or wireless communication protocols, such as Wi-Fi, mobile telecommunications technology (e.g., 2G, 3G, 4G, 5G, LTE), Bluetooth^{®}, near-field communications technology, and the like.

The condition monitoring system 50 may include one or more cameras 62, one or more sensors 64, a controller 66, input/output (I/O) ports 68, a processor 70, a memory 72, communication circuitry 74, a display 76, image processing circuitry 78, one or more machine learning engines 80, and the like. The one or more cameras 62 may include infrared cameras, CCD cameras, DSLR cameras, SLR cameras, mirrorless cameras, or one or more digital cameras. The one or more cameras 62 may include complementary metal-oxide-semiconductor (CMOS) cameras, charge-coupled devices (CCD), electron-multiplier charge-coupled devices (EMCCD), InGaAs detectors, one or more photodiodes, pyroelectric sensors, one or more photodetectors, and/or other suitable detectors. The cameras 62 may visual data in one or more regions of the electromagnetic spectrum. For example, the cameras 62 may include capture visual data in the ultraviolet region, the visible region, and/or the infrared region (IR) (e.g., short wave, mid wave, and/or long wave IR). The cameras 62 may collect visual data ranging from 157 nm to 220 nm, 200 nm to 400 nm, 400 nm to 600 nm, 480 nm to 880 nm, 880 nm to 1800 nm, 2000 to 3000 nm, 3000 to 5000 nm, and/or 8000 to 14000 nm. The cameras 62 may collect visual data. The visual data may include video data (e.g., digital representation of moving images and/or audio), image data (e.g., digital representation of one or more static images), or a combination thereof. The visual data may be analyzed and may be enable use of vision as sensor. The visual data may be analyzed to extract features that are non-obvious to operational users. In some embodiments, AI technologies identify a subset of the features of the visual data to determine operational parameters of the industrial automation equipment 58. In some embodiments, a first camera may be positioned at a first angle and a second camera may be positioned at a second angle to capture video data of industrial automation equipment 58 from various angles. The first camera may be of a first type (e.g., IR camera) and the second camera may be of a second type (e.g., RBG camera). As such, the cameras 62 may capture visual data within various spectral regions to be provided for further analysis by the condition monitoring system 50.

The one or more sensors 64 may be any number of devices adapted to provide information regarding operation conditions of the industrial automation equipment 58. The sensors 64 may include one or more temperature sensors, pressure sensors, motion sensors, and the like. The controller 66 may be configured to receive data from the cameras 62 and/or the sensors 64 and control the HMI 52, the industrial automation equipment 58, and/or one or more additional components of the condition monitoring system 50.

The I/O ports 68 may be interfaces that may couple to the HMI 52, the industrial automation equipment 58, other peripheral components such as input devices (e.g., keyboard, mouse), sensors, input/output (I/O) modules, and the like. The communication circuitry 74 may facilitate wired or wireless communication between various components of the condition monitoring system 50 as well as with external devices (e.g., mobile device, HMIs, etc.). The processor 70 may be any suitable type of computer processor or microprocessor capable of executing computer-executable code. Moreover, the processor 70 may include multiple microprocessors, one or more "general-purpose" microprocessors, one or more special-purpose microprocessors, and/or one or more application specific integrated circuits (ASICs), or some combination thereof. For example, the processor 70 may include one or more than one reduced instruction set (RISC) or complex instruction set (CISC) processors.

The memory 72 of the condition monitoring system 50 may also be used to store the data, various other software applications, and the like that are executed by the processor 70. The memory 72 may represent non-transitory computer-readable media (e.g., any suitable form of memory or storage) that may store the processor-executable code used by the processor 70 to perform various techniques described herein. The processor 70 may be configured to execute instructions. The instructions, when executed by the processor 70, may enable the condition monitoring system 50 to control the cameras 62 and/or the sensors 64 to provide data for feature extraction. The condition monitoring system 50 may include the display 76 that is configured to display text or images transferred to it from the processor 70. In addition to and/or alternative to the display 76 may include other devices for interfacing with a user, such as lights (e.g., LEDs), speakers, and the like.

The condition monitoring system 50 may include video data prepared by image processing circuitry 78 (e.g., image processing circuitry within the processor 70) or uncompensated video data. The image processing circuitry 78 may work in combination with the engines 80 to analyze data used to monitor operation of the industrial automation equipment 58. In some embodiments, the image processing circuitry 78 may preprocess visual data generated by the cameras 62. Preprocessing may include cropping, rotating, applying one or more masks, and the like to the visual data. The engines 80 may include a feature extraction engine 82, a clustering engine 84, and/or one or more additional engines. The engines 80 may use AI technologies including neural networks, machine learning models, and the like. The engines 80 may use various AI based algorithms to analyze vide data obtained from the cameras 62, the sensors 16, 64, and the like. The engines 80 may utilize one or more predictive models for analysis of the video data, process data, and the like. Various types of predictive models may be used to analyze data from variety of resources and generate predictive outputs. The engines 80 may include various types of artificial neural networks (ANN), such as Convolution Neural Networks (CNN), Recurrent Neural Networks (RNN), etc. The condition monitoring system 50 may also communicate with the databases 54, which may store information associated with the sensors 16, related process data, and the like.

In some embodiments, the feature extraction engine 82 may be trained with an unsupervised machine learning technique, i.e., a predictive model is trained with training data that includes input data (e.g., unlabeled dataset). In some instances, the feature extraction engine 82 may be trained with a partially unsupervised machine learning technique, i.e., a predictive model is trained with training data that includes input data with a first portion without desired predictive output (e.g., unlabeled dataset) and a second portion with desired predictive output (e.g., labeled dataset). The feature extraction engine 82 may use the unsupervised model to process unlabeled visual data, unlabeled process data, unlabeled historical data, and the like. The feature extraction engine 82 may use principal component analysis (PCA), kernel PCA, linear discriminant analysis (LDA), generalized discriminant analysis (GRA), T-distributed stochastic neighbor embedding (t-SNE), non-negative matrix factorization (NMF), and the like. For example, the feature extraction engine 82 may receive unlabeled visual data from the cameras 62. The feature extraction engine 82 may filter the unlabeled visual data using one or more filters. The filters may be used to convert the unlabeled visual data into gray scale, generate a depth map for the visual data, and the like. The feature extraction engine 82 may perform vectorization of the visual data, apply one or more transformers, and the like.

The feature extraction engine 82 may extract one or more features from the visual data associated with specific operations of the industrial automation equipment 58 to generate visual data with reduced dimensionality. For example, the feature extraction engine 82 may include an unsupervised model configured to process unlabeled video data, unlabeled process data, unlabeled historical data, and the like. For example, the feature extraction engine 82 may identify a variety of features associated with temporal features, one or more spatial features, or a combination thereof extracted from visual data collected by the cameras 62.

The clustering engine 84 may categorize the extracted features from the visual data provided by the feature extraction engine 82 to generate a baseline indicative of nominal operation of the industrial automation equipment 58. The features provided to the clustering engine 84 may be unlabeled, as such, the clustering engine 84 may group one or more clusters based on a similarity between data points. The one or more clusters may be associated with the baseline. As such, the clustering engine 84 may receive additional visual data during operation of the industrial automation equipment 58 and analyze divergence from the baseline based on formation of one or more new clusters.

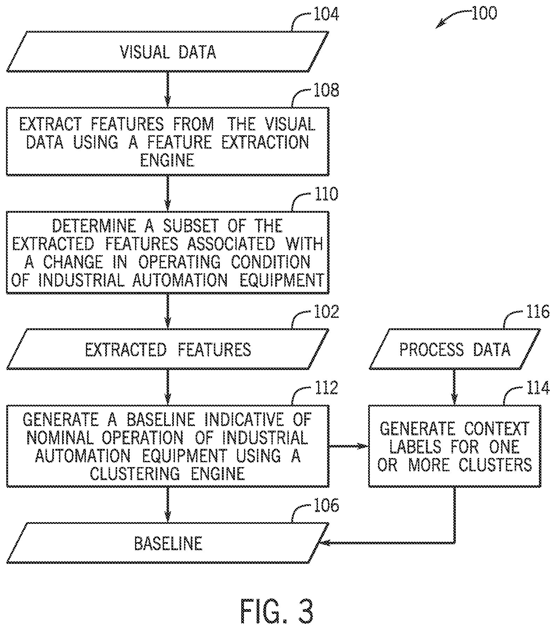

FIG. 3 is a flow diagram of a process 100 to generate one or more extract features 102 from visual data 104 (e.g., image data, video data, or otherwise data including a series of images) to generate a baseline 106 indicative of operation of industrial automation equipment 58, in accordance with aspects of the present techniques. The process 100 may be performed by the engines 80 (e.g., the feature extraction engine 82 and/or the clustering engine 84) of the condition monitoring system 50, a computing device and/or a HMI 52 disclosed above with reference to FIG. 1 and FIG. 2 or any other suitable computing device(s) or controller(s). Furthermore, the blocks of the process 100 may be performed in the order disclosed herein or in any suitable order. For example, certain blocks of the process 100 may be performed concurrently. In addition, in certain embodiments, at least one of the blocks of the process 100 may be omitted.

At block 108 of the process 100, the condition monitoring system 50 may receive the visual data 104 and extract one or more features from the visual data 104 using a feature extraction engine 82. The visual data 104 may be generated by the cameras 62 of the condition monitoring system 50. The visual data 104 may include preprocessed video data (e.g., crop, rotate, mask, and the like). The feature extraction engine 82 may perform feature extraction and output one or more features associated with the visual data 104. The feature extraction engine 82 may include an unsupervised machine learning model that may be used to extract features from unlabeled visual data (e.g., the visual data 104). In some embodiments, the features extracted by the feature extraction engine 82 may be generated from visual data from multiple cameras 62. For example, the visual data 104 may include data of operation of the industrial automation equipment 58 from one or more angles, one or more spectral regions, and the like. As one specific non-limiting example, the visual data 104 may include streamed video data obtained by a camera 62 arranged such that it captures video data of materials deposited on the conveyor 24. As another specific non-limiting example, the visual data 104 may include a series of infrared s images acquired by the camera 62 and/or the sensor 64 arranged to detect gas molecules (e.g., water or carbon dioxide in the context of baking) formed or emitted from a material baking within the oven 26. The feature extraction engine 82 may extract features from the visual data 104 that may be used to determine the baseline 106. The feature extraction engine 82 may determine these features in an unsupervised manner (e.g., without input from an operator) and, as such, may be capable of identifying features that an operator may not otherwise monitor or identify. That is, a user might look at visual data and monitor the color change of the bun being baked as a whole, while the feature extraction engine 82 may instead identify a particular subset of pixels that corresponds to an area in which heat is applied by the oven is more irregular but also serves as a better visual indication of the progression of the bake. Processing the subset of the data corresponding to the feature (e.g., the subset of pixels) uses less computational resources and therefore improves the efficiency of monitoring an industrial automation process by allowing conditions to be identified more quickly.

At block 110, the condition monitoring system 50 may determine a subset of the extracted features associated with a change in operating condition of the industrial automation equipment 58. The subset of the extracted features may be identified by the feature extraction engine 82. For example, the feature extraction engine 82 may include an unsupervised machine learning model that may be used to perform dimensionality reduction while maintaining features of the visual data associated with operation of the industrial automation equipment 58. As such, the feature extraction engine 82 may process the visual data 104 to remove one or more redundant features, noise, and the like. In some embodiments, the feature extraction engine 82 may determine the subset of the extracted features associated with one or more key operations of the industrial automation equipment 58. The subset of extracted features (e.g., the extracted features 102) may include one or more temporal features, one or more spatial features, and the like. In some embodiments, the feature extraction engine 82 may update the extracted features 102 identified as associated with the change in operating conditions. For example, a change in an operating setting of a particular piece of equipment may impact the extracted features 102 identified by the feature extraction engine 82. As such, the feature extraction engine 82 may dynamically provide updates to feature extraction and reduction of dimensionality of the visual data.

At block 112 of the process 100, the condition monitoring system 50 receives the extracted features 102 and generates a baseline 106 indicative of nominal operation (e.g., normal operation, anticipated operation) of the industrial automation equipment using a clustering engine 84. In some embodiments, generation of the baseline 106 may be determined based on generation of unlabeled clusters by the clustering engine 84. For example, the clustering engine 84 may receive the extracted features 102 from the visual data 104 and partition the extracted features 102 into one or more clusters (e.g., groups of datapoints) based on a distance between one or more centroids of the groups. The centroids (e.g., cluster centers) may be the mean or median of all datapoints within a respective cluster. The clustering engine 84 may generate the clusters in an iterative fashion to minimize a distance between the datapoints to generate one or more distinct clusters. The clusters may be unlabeled, that is the clusters may be representative of particular characteristics within the extracted features 102 but such characteristics may not be identified.

As a non-limiting example, consider the shrink wrapper 38 of FIG.1, the shrink wrapper 38 may be monitored by the condition monitoring system 50 generating visual data. The visual data may be analyzed by the feature extraction engine 82 and one or more extracted features may be identified as related to operation of the shrink wrapper 38. The clustering engine 84 may receive the extracted features indicative of operation of the shrink wrapper 38 and partition the extracted features into one or more unlabeled clusters. The unlabeled clusters may be defined using a similarity threshold based on a distance of each data point from the centroid of a particular unlabeled cluster. In some instances, the unlabeled clusters may form a baseline indicative of nominal operation of the shrink wrapper 38. The condition monitoring system 50 may output the baseline 106 including unlabeled clusters. The baseline 106 may be used to establish normal operating parameters of the industrial automation equipment 58.

In certain embodiments, the clustering engine 84 may form one or more labeled clusters. At block 114 of the process 100, the condition monitoring system 50 may receive process data 116 and generate one or more context labels for the one or more clusters formed at block 112. The process data 116 may include data generated from the industrial automation equipment 58, historical data, user inputs, and the like. The clustering engine 84 may associate one or more operational characteristics and/or parameters with each cluster of the one or more clusters of the baseline 106. For example, the condition monitoring system 50 may associate a first label with a first cluster of the baseline indicative of nominal operation of the shrink wrapper 38. The first label may correspond to a first operation of the shrink wrapper 38 such as a rate of film feed into the shrink wrapper 38. The condition monitoring system 50 may associate a second label with a second cluster of the baseline indicative of nominal operation of the shrink wrapper 38. The second label may correspond to a second operation of the shrink wrapper 38 such as motion of spacer wheels of the shrink wrapper 38. In this manner, the clusters making up the baseline may be associated with particular operations of the shrink wrapper 38 and labeled accordingly. The condition monitoring system 50 may output the baseline 106 including labeled clusters. The baseline 106 may be used to establish normal operating parameters of the industrial automation equipment 58 over a period of time. It should be noted block 114 of the process 100 may be omitted.

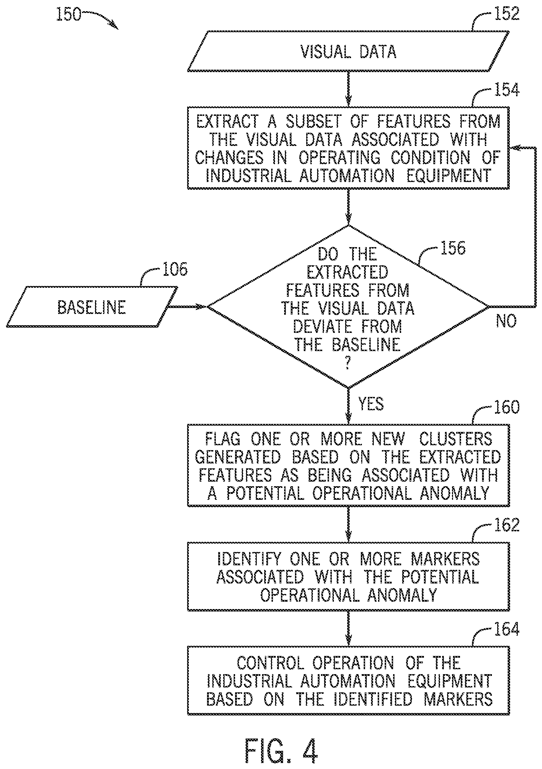

FIG. 4 is a flow diagram of a process 150 to extract features from visual data 152 to control operation of industrial automation equipment 58, in accordance with aspects of the present techniques. The process 150 may be performed by the engines 80 (e.g., the feature extraction engine 82 and/or the clustering engine 84) of the condition monitoring system 50, a computing device and/or an HMI 52 disclosed above with reference to FIG. 1 and FIG. 2 or any other suitable computing device(s) or controller(s). Furthermore, the blocks of the process 150 may be performed in the order disclosed herein or in any suitable order. For example, certain blocks of the process 150 may be performed concurrently. In addition, in certain embodiments, at least one of the blocks of the process 150 may be omitted.

At block 154 of the process 150, the condition monitoring system 50 may receive the visual data 152 and extract a subset of features from the visual data 152 associated with changes in operation condition of the industrial automation equipment 58. The visual data 152 may be generated by the cameras 62 of FIG. 2 of the condition monitoring system 50. The visual data 152 may be a portion of the visual data 104 of FIG. 3 and/or visual data obtained after the baseline 106 is established. The visual data 152 may be preprocessed (e.g., crop, rotate, mask, and the like) by the image processing circuitry 78 and/or one or more additional components of the condition monitoring system 50. The visual data 152 may be captured in near real-time, providing a video stream of operation of the industrial automation equipment 58. In some embodiments, the visual data 152 may include data from various cameras observing one or more distinct pieces of equipment. Additionally and/or alternatively, the visual data 152 may include data of operation of the industrial automation equipment 58 from one or more angles, one or more spectral regions, and the like. The feature extraction engine 82 may perform feature extraction and output one or more features associated with the visual data 104. In some embodiments, the extracted features may correspond to the extracted features 102 discussed in reference to FIG. 3. That is, the extracted features may include a subset of features (e.g., reduced dimensionality) of the visual data 152 associated with operation of the industrial automation equipment 58. In certain embodiments, the extracted features may include distinct features for each distinct piece of equipment observed within the visual data 152.

At block 156 of the process 150, the condition monitoring system 50 may receive a baseline 106. The baseline 106 is indicative of nominal operation of the industrial automation equipment 58 within the visual data 152. The baseline 106 may be generated as described in reference to baseline 106 of FIG. 3. Briefly, the baseline 106 may be generated by the clustering engine 84 based on partitioning data points of extracted features from visual data collected during normal operation of the industrial automation equipment 58. It should be noted, the baseline 106 may be generated based on visual data that differs from the visual data 152. That is, the visual data 104 used to generate the baseline 106 may include a subset of visual data 152 and/or additional visual data corresponding to a period of time of nominal operation of the industrial automation equipment 58 of interest.

The condition monitoring system 50 may determine if the extracted features from the visual data 152 deviate from the baseline 106 at block 156. In some embodiments, the condition monitoring system 50 may determine the deviation from the baseline 106 based on formation of one or more new clusters (e.g., one or more data points) outside a threshold distance from the clusters making up the baseline 106. Deviation from the baseline 106 may be indicative of a change in operation of associated industrial automation equipment. The threshold distance may be based on a distance between a particular data point and a centroid of the clusters of the baseline, a ratio of distance based on a ration between the distance of the particular data point to its closest centroid and the distance to a second-closest centroid, and the like. The particular data point may be identified as an outlier data point. Multiple data points identified as exceeding the threshold distance from the baseline 106 may be identified as a new cluster. If no deviation from the baseline 106 is detected for the extracted features then the condition monitoring system 50 may return to block 154. However, if the condition monitoring system 50 detects a deviation from the baseline 106 then the condition monitoring system 50 may proceed to block 160 as formation of the new cluster may be indicative of a potential anomaly in operation of the industrial automation equipment 58.

At block 160 of the process 150, the condition monitoring system 50 may flag one or more new clusters generated based on the extracted features as being associated with a potential operational anomaly. The condition monitoring system 50 may identify the one or more new clusters based on data points exceeding the threshold distance from the baseline 106 may be indicative of a change in operation of the industrial automation equipment 58. As such, the condition monitoring system 50 may provide an output associated with the detected change. The output may be an alert, notification, or visualization that provides information to a user and/or the HMI 52 to anticipate a change in production and/or operation. Such change in production and/or operation may be provided prior to impact in production and/or operation as the change in features of the industrial automation equipment 58 may be determined prior to the change being detected in associated process data. In this manner, the condition monitoring system 50 may predict changes in operation and/or production based on changes imperceptible to human operators and/or traditional monitoring systems.

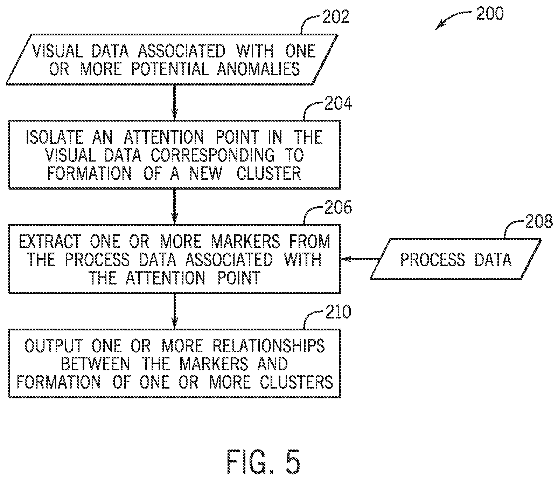

In some embodiments, it may be beneficial for the condition monitoring system 50 to identify one or more particular operational parameters responsible for generating deviation from the baseline 106 indicative of nominal operation of the industrial automation equipment 58. As such, the process 150 may proceed to block 162 causing the condition monitoring system 50 to identify one or more markers associated with the potential operational anomaly. The markers may be associated with one or more variables of the process data such as temperature data, vibration data, current data, drive data, and the like. Identification of the markers by the condition monitoring system 50 is discussed below in reference to FIG. 5.

At block 164 of the process 150, the condition monitoring system 50 may control operation of the industrial automation equipment 58 based on the identified markers. Controlling the operation of the industrial automation equipment 58 may include the condition monitoring system 50 outputting a control signal that changes operational parameters (e.g., a speed of a conveyor 24, a temperature provided by the oven 26, and the like). The industrial automation equipment 58 may be controlled based on instructions provided from the condition monitoring system 50 to the HMI 52 and/or directly to controllers of the industrial automation equipment 58. In this manner, the condition monitoring system 50 may provide increased granular and anticipatory control of industrial operations decreasing operational downtime.

As described above, the condition monitoring system 50 may identify one or more markers associated with the potential operation anomaly. The one or more markers may make it easier (e.g., utilize fewer computational resources) for the condition monitoring system 50 to identify future occurrences of the anomaly or other operations that may cause the anomaly. To that end, FIG. 5 is a flow diagram of a process 200 of predicting formation of one or more new clusters associated with one or more markers within process data, in accordance with aspects of the present techniques. The process 200 may be performed by the engines 80 (e.g., the feature extraction engine 82 and/or the clustering engine 84) of the condition monitoring system 50, a computing device and/or an HMI 52 disclosed above with reference to FIG. 1 and FIG. 2 or any other suitable computing device(s) or controller(s). Furthermore, the blocks of the process 200 may be performed in the order disclosed herein or in any suitable order. For example, certain blocks of the process 200 may be performed concurrently. In addition, in certain embodiments, at least one of the blocks of the process 200 may be omitted.

At block 204 of the process 200, the condition monitoring system 50 receives visual data 202 associated with one or more potential anomalies. The visual data 152 may be associated with a predicted change in operation of the industrial automation equipment 58 as described in reference to FIG. 4. As compared to the visual data 152 of FIG. 4, the visual data 202 may be a subset of the visual data 104. That is, the visual data 202 may include data within a time window occurring before the time period (e.g., 10 seconds(s) before, 30s before, 1 minute(min) before, 2 mins before, 30 mins before, 1 hour before) corresponding to the one or more potential anomalies. At block 204, the condition monitoring system 50 may isolate an attention point in the visual data 202 corresponding to formation of a new cluster. The condition monitoring system 50 may determine the attention point using transformer architecture to determine a relationship between the extracted features over time to identify formation of the new cluster. The attention point may be based on geometric relationships between data point placement within a particular cluster and/or between one or more clusters, semantic relationships between the data points based on characteristics of the extracted features, and the like.

At block 206 of the process 200, the condition monitoring system 50 receives process data 208 associated with operation of the industrial automation equipment 58. The process data 208 may be collected during a corresponding period of time in which the visual data 202 is collected. The process data 208 may be a portion of the process data 116 of FIG. 3. At block 206, the condition monitoring system 50 may extract one or more markers from the process data 208 associated with the attention point. That is, the markers may identify changes to variables within the process data 208 causing the one or more potential anomalies. The markers may correspond to a change in process data such as a change in temperature data, vibration data, pressure data, current data, drive data, and the like. Extraction of the markers from the process data may be based on a correlation of the attention point in the visual data 202 and change in variables of the process data 208. In some embodiments, the change in the process data identified based on the correlation with the attention point may be detected prior to detection of deviations within the process data 208 itself. In some embodiments, the markers may be identified based on associations between visual data and historical process data. That is, the condition monitoring system 50 may train using historical data to preemptively identify markers from process data corresponding to formation of new clusters.

In some embodiments, the condition monitoring system 50 may iteratively extract markers associated with formation of one or more additional clusters. In this manner, visual data related to additional potential anomalies may be used to build up a list of relationship between the markers and formation of distinct clusters. As such, the condition monitoring system 50 may provide information related to various changes in operation of the industrial automation equipment 58. At block 210 of the process 200, the condition monitoring system 50 may output one or more relationships between he markers and formation of one or more clusters. The relationships may be used by the clustering engine 84 during real-time monitoring of visual data related to operation of the industrial automation equipment to not only flag potential changes in operation of the industrial automation equipment 58 but to provide information related to a source of such change. Providing the relationships between the markers and the formation of new clusters enables the condition monitoring system 50 to isolate causes of changes in operation of the components of the industrial automation system and reduce operational downtime.

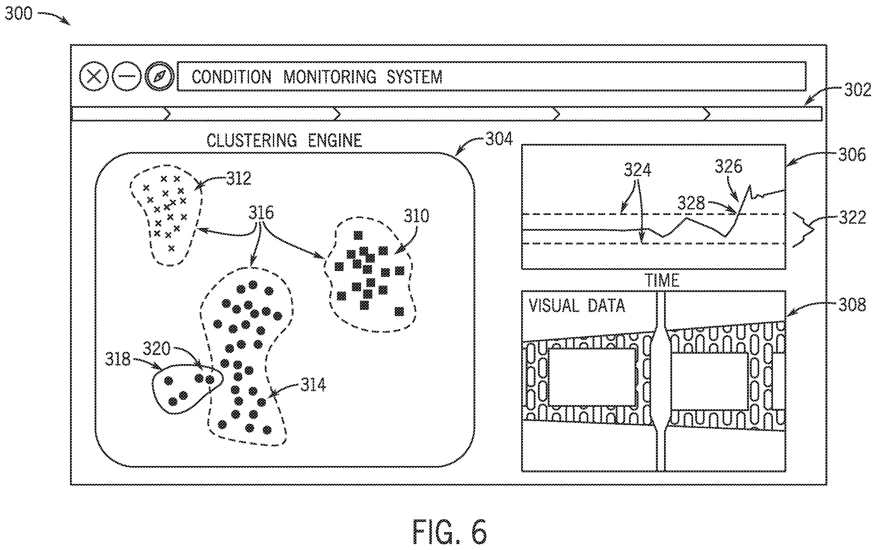

The condition monitoring system 50 may cause the display 76 of FIG. 2 to generate a visualization that aids an operator or user in monitoring operation of the industrial automation equipment 58. FIG. 6 is a schematic embodiment of a graphical user interface (GUI) 300 generated within the condition monitoring system 50 of FIG. 2, in accordance with aspects of the present techniques. The condition monitoring system 50 may provide (e.g., generate and/or cause the display of) the GUI 600 via a display 76 and/or one or more additional displays. The condition monitoring system 50 may display a screen 302 on the GUI 300 having one or more widgets 304, 306, 308 that may be used to visualize and provide information related to the visual data, the baseline, the clusters, and the like associated with outputs of the feature extraction engine 82 and/or the clustering engine 84 of the condition monitoring system 50. In this manner, the condition monitoring system 50 may receive user inputs via the one or more widgets 304, 306, 308. The GUI 300 of the condition monitoring system 50 may provide alerts, notifications, status updates, user requests, flagged operations, operational recommendations, and the like.

In some embodiments, the widgets 304, 306, 308 of the condition monitoring system 50 include a clustering widget 304, a baseline monitoring widget 306, a visual data widget 308, and the like. The clustering widget 304 may include one or more clusters 310, 312, 314 associated with a baseline indicative of nominal operation of the industrial automation equipment 58. The clusters 310, 312, 314 may each include a series of data points generated by the clustering engine 84 by analyzing extracted features provided by the feature extraction engine 82. As shown, the clusters 310, 312, 314 may include a border 316 (e.g., cluster edge) corresponding to a perimeter defined by one or more thresholds. The thresholds may be based on a distance from a centroid of the clusters 310, 312, 314.

In certain embodiments, a new cluster 318 may be identified by the clustering engine 84. The new cluster 318 may be indicative of a change in operation of the industrial automation equipment 58. The new cluster 318 may be made up of one or more data points indicative of extracted features generated by the feature extraction engine 82. As shown, an attention point 320 may be identified as a data point corresponding to a first data point outside the borders 316 of the clusters 310, 312, 314 corresponding to nominal operation of the industrial automation equipment. In some embodiments, the baseline monitoring widget 306 may be used to monitor for formation of new clusters. As such, the baseline monitoring widget 306 may include a graph to monitor deviations from a baseline 322 over time. The baseline 322 may be characteristic of the clusters 310, 312, 314 indicative of nominal operation (e.g., expected operation) of the industrial automation equipment 58. As such, the baseline 322 may be monitored to determine deviations related to data points and/or new clusters forming outside the clusters 310, 312, 314 reminding within the borders 316. As such one or more threshold 324 may correspond to the thresholds determined by the clusters 310, 312, 314 making up the baseline 322 indicative of nominal operation of the industrial automation equipment 58.

In some embodiments, the baseline monitoring widget 306 may indicate the formation of the new cluster 318 as a graphical line 326 exceeds the thresholds 324 of the baseline 322. The line 326 exceeding the thresholds 324 may correspond to the formation of the new cluster 318. The attention point 320 may correspond to a first point 328 on the line 326 in which the data points exceed the baseline 322. The visual data widget 308 may display video data from the one or more cameras 62 of FIG. 2. In some embodiments, the visual data widget 308 may display preprocessed data, filtered data, and the like. As shown, the visual data may be associated with one or more objects 330 moving on a conveyor belt 332.

The techniques presented and claimed herein are referenced and applied to material objects and concrete examples of a practical nature that demonstrably improve the present technical field and, as such, are not abstract, intangible or purely theoretical. Further, if any claims appended to the end of this specification contain one or more elements designated as "means for [perform]ing [a function]..." or "step for [perform]ing [a function]...", it is intended that such elements are to be interpreted under 35 U.S.C. 112(f). However, for any claims containing elements designated in any other manner, it is intended that such elements are not to be interpreted under 35 U.S.C. 112(f).

While only certain features of the embodiments described herein have been illustrated and described, many modifications and changes will occur to those skilled in the art. It is, therefore, to be understood that the appended claims are intended to cover all such modifications and changes as fall within the true spirit of the embodiments described herein

## Claims

1. A method comprising:
retrieving first visual data indicating operations of industrial automation equipment;
extracting a plurality of features from the first visual data;
determining a subset of the plurality of features of the first visual data, wherein the subset of the plurality of features indicates a change in an operating condition of the industrial automation equipment;
retrieving second visual data indicating the operations of the industrial automation equipment;
detecting, using the second visual data, the change in the operating condition of the industrial automation equipment based on the subset of the plurality of features; and
generating an output to control the operations of the industrial automation equipment based on the detected change in the operating condition.

2. The method of claim 1, wherein the plurality of features comprises one or more temporal features, one or more spatial features, or a combination thereof.

3. The method of claim 1 or 2, wherein the second visual data comprise a subset of the first visual data.

4. The method of one of claims 1 to 3, wherein detecting the change in the operating condition of the industrial automation equipment comprises determining the subset of the plurality of features deviate from a baseline, wherein the baseline comprises one or more clusters of datapoints representative of the subset of the plurality of features.

5. The method of claim 4, comprising determining the subset of the plurality of features deviate from the baseline above a threshold deviation.

6. The method of one of claims 1 to 5, at least one of:
further comprising providing one or more notifications based on detection of the change in the operating condition of the industrial automation equipment;
further comprising providing a graphical user interface (GUI) configured to display the subset of the plurality of the features, and wherein the GUI is configured to display the change in the operating condition of the industrial automation equipment based on the subset of the plurality of features;
the method comprising utilizing a feature extraction engine to perform extraction of the plurality of features from the first visual data and determine the subset of the plurality of features of the first visual data; and
the method comprising utilizing a clustering engine to detect the change in the operating condition of the one or more industrial automation equipment based on the subset of the plurality of features.

7. The method of one of claims 1 to 6, comprising
retrieving process data associated with operation of the industrial automation equipment;
isolating an attention point in the second visual data corresponding to formation of a new cluster;
extracting one or more markers from the process data associated with the attention point; and
outputting one or more relationships between the one or more markers and formation of the one or more clusters.

8. A system, comprising:
one or more cameras configured to capture visual data associated with operations of industrial automation equipment;
a processing circuitry; and
a memory, accessible by the processing circuitry, the memory storing instructions that, when executed by the processing circuitry cause the processing circuitry to perform operations comprising:
retrieving the visual data from the one or more cameras;
retrieving process data associated with operation of the industrial automation equipment; detecting, via a clustering engine, a change in operating condition of the industrial automation equipment based on a subset of features of the visual data;
extracting one or more markers from the process data associated with the detected change in operating condition of the industrial automation equipment; and
generating an output to control operations of the industrial automation equipment based on the one or more markers associated with the detected change in the operating condition.

9. The system of claim 8, wherein the instructions, when executed, cause the processing circuitry to perform the operations comprising:
retrieving additional visual data indicating expected operations of the industrial automation equipment;
extracting, via a feature extraction engine, a plurality of features from the additional visual data; and
determining a subset of the plurality of features of the additional visual data, wherein the subset of the plurality of features corresponds to a baseline indicative of nominal operation of the industrial automation equipment.

10. The system of claim 9, wherein the feature extraction engine is an unsupervised model configured to extract the plurality of features from unlabeled visual data.

11. The system of one of claims 8 to 10, at least one of:
wherein the clustering engine is an unsupervised model, and wherein the clustering engine is configured to generate one or more clusters corresponding to a baseline indicative of nominal operation of the industrial automation equipment;
wherein the instructions, when executed, cause the processing circuitry to perform the operations comprising:
isolating an attention point in the visual data corresponding to formation of a new cluster; and
extracting one or more markers from the process data associated with the attention point; and
the system comprising one or more sensors associated with the industrial automation equipment, wherein output of the one or more sensors comprises the process data.

12. A non-transitory computer-readable medium comprising computer-executable instructions that, when executed, are configured to cause a processor to perform operations comprising:
receiving first visual data indicating operations of one or more industrial automation equipment;
extracting a plurality of features from the first visual data;
determining a subset of the plurality of features of the first visual data, wherein the subset of the plurality of features indicates a change in an operating condition of the one or more industrial automation equipment;
receiving second visual data indicating the operations of the one or more industrial automation equipment;
detecting, using the second visual data, the change in the operating condition of the one or more industrial automation equipment based on the subset of the plurality of features; and
generating an output to control the operations of the one or more industrial automation equipment based on the detected change in the operating condition.

13. The non-transitory computer-readable medium of claim 12, wherein the processor performs operations comprising:
retrieving process data associated with operation of the industrial automation equipment;
isolating an attention point in the second visual data corresponding to formation of a new cluster;
extracting one or more markers from the process data associated with formation of the new cluster; and
outputting one or more relationships between the one or more markers and formation of the one or more clusters.

14. The non-transitory computer-readable medium of claim 12 or 13, wherein the processor performs operations comprising detecting the change in the operating condition of the industrial automation equipment by determining the subset of the plurality of features deviate from a baseline, wherein the baseline comprises one or more clusters of datapoints representative of the subset of the plurality of features.

15. The non-transitory computer-readable medium of claim 14, wherein the processor performs operations comprising determining the subset of the plurality of features deviate from the baseline by a threshold deviation.
